# EUROPEAN PATENT SPECIFICATION

(11) **EP 2 426 176 B1**
(45) Date of publication and mention of the grant of the patent: **12.11.2014**
(21) Application number: 11180105.6
(22) Date of filing: 05.09.2011
(51) Int. Cl.: C09D 5/00, C09D 167/06, C09D 167/07, C09J 167/06, G03G 7/00, B41M 5/50

(54) **Use of radiation curable primer coating**
Benutzung einer Stromhärtbare Primerbeschichtung
Utilisation d'un revêtement d'apprêt durcissable par rayonnement

(30) Priority: 03.09.2010 US 379749 P; 02.09.2011 US 201113224800
(43) Date of publication of application: 07.03.2012
(73) Proprietor: MICHELMAN, INC., Cincinnati, OH 45236-1299 (US)
(72) Inventor: Seung, Norman, Mason, OH Ohio 45040 (US); Michelman, Richard, Cincinnati, OH Ohio 45208 (US)
(74) Representative: Moore, Michael Richard

(56) References cited:
- WO-A1-01/10640
- WO-A2-2008/048533
- US-A1- 2010 183 819
- US-B2- 7 470 736

## Description

### FIELD OF THE INVENTION

The present invention relates to a radiation curable primer coating for use on substrates, and more particularly, to a 100% solids liquid primer coating which can be applied to a variety of substrates and cured to form a coating that provides good ink adhesion and high print quality for substrates designed to be printed using an electrophotographic printing device.

### BACKGROUND OF THE INVENTION

In recent years, the use of on-demand, high-speed digital printing machines utilizing liquid or dry toners or inks in electrophotographic systems has become widespread. Examples of printers using such toners or inks are commercially available from Hewlett-Packard Company under the trade name HP Indigo. However, as liquid toners do not transfer well and/or adhere well to the films or paper substrates when printed on such presses, the substrates are typically treated with a coating or primer to enhance the adhesion of toners thereto.

A number of coatings or primers have been developed for use on substrates such as cellulosic or polymeric substrates which render the surface of the substrates more receptive to liquid toners. In such systems, toner images are formed on a photosensitive drum and then electrically transferred onto an intermediate transfer blanket or belt for printing on a paper or polymeric film sheet or web. One such primer coating is described in commonly-assigned U.S. Patent No. 7,470,736, which is a water-based coating for enhancing adhesion of liquid water-based or solvent-based, a disadvantage of such primers is that the water or solvent must be removed or dried prior to printing, which requires a significant amount of energy (e.g., heat) and time to evaporate the water or solvent. This also results in reduced line speeds when the substrate is coated and processed, as the solvent and water must be removed from the primer coating. Then the substrate, typically provided in roll form, must often be wound and transferred to a separate printing press.
WO 2008 048533 discloses a fast curing radiation curable ink composition which includes an oligomer such as a polyester acrylate oligomer a difunctional ethylenically unsaturated compound and a photoinitiator.

Accordingly, there is a need in the art for a primer coating for use on a variety of substrates which does not require the use of water or solvents, which provides effective ink adhesion and print quality, and which may be easily and efficiently coated, cured, and printed in line.

### SUMMARY OF THE INVENTION

Embodiments of the invention meet those needs by providing a 100% solids energy curable liquid primer coating which can be applied to cellulosic, polymeric, or metallic foil substrates and cured to form a dried coating which provides good ink receptivity/adhesion and abrasion resistance. Because the primer coating does not contain water or other solvents, the coating may be applied to a substrate and then cured without the need for drying so that the coated substrate can be printed in line directly after crosslinking.

According to one aspect of the invention, use of a 100% solids energy curable liquid primer coating is provided for enhancing ink adhesion to a substrate, the coating comprising from 35 to 65% by weight of a polyester acrylate, from 20 to 60% by weight of at least one acrylated amine, and, from 1 to 15% by weight of a photoinitiator. The coating of the invention provides improved ink adhesion on a substrate when printed with an electrophotographic printer in comparison with an uncoated substrate. By "100% solids", it is meant that the coating contains no water or other solvents (e.g. aqueous or organic solvents) or carriers. In other words, the primer coating is "solvent-free", and the phrase "solvent-free" and "100% solids" may be used interchangeably herein. Accordingly, the invention provides a solvent-free, energy curable liquid primer coating for enhancing ink adhesion to a substrate, as defined above and elsewhere herein. The solvent-free primer coating of the invention thus has the same features and optional features as described herein in relation to the 100% solids liquid primer. As used herein, the term "monomer" also includes oligomers of that monomer.

The coating provides improved ink adhesion on a substrate over that of an uncoated substrate when printed with an electrophotographic printer. The coating may provide at least 70% ink adhesion on a substrate.

In one embodiment, the primer coating further includes an additional acrylate monomer which is different than the polyester acrylate and at least one acrylated amine. In one embodiment, the acrylate monomer is selected from lauryl acrylate, isodecyl acrylate, 1,6-hexanediol diacrylate, and trimethylolpropane ethoxy triacrylate.

In another embodiment, the primer coating includes at least one additional acrylated amine.

In one embodiment, the primer coating further includes an aliphatic epoxy acrylate or an aliphatic urethane acrylate.

In another aspect of the invention, a 100% solids energy curable liquid primer coating is provided comprising: a) from 35 to 65% by weight of a polyester acrylate, b) from 20 to 60% by weight of at least one acrylated amine; c) from 0 to 10% by weight of an acrylate monomer; and d) from 1 to 15% by weight of a photoinitiator. In one embodiment, the primer coating includes from 1 to 20% by weight of at least one additional acrylated amine.

The 100% solids energy curable coating of the invention may be applied to a substrate. Thus, in another aspect the invention provides a method for applying a 100% solids energy curable liquid primer coating for enhancing ink adhesion to a substrate comprising: providing a substrate having first and second major surfaces, applying a 100% solids energy curable liquid primer coating to at least one of the first and second major surfaces of the substrate, the coating comprising from 35 to 65% by weight of a polyester acrylate, from 20 to 60% by weight of at least one acrylated amine, and, from 1 to 15% by weight of a photoiniatiator, and exposing said coating composition to radiation sufficient to cure the coating composition and form a coated substrate. In one embodiment, the substrate comprises paper, clay-coated or uncoated paper board, polymeric material, a metallized substrate, or metal foil. The invention further relates to a coated substrate, wherein the substrate is coated with a primer coating according to the invention and cured thereon.

The coating may be applied to a substrate by gravure, offset gravure, flexographic, screen, or rod coating. The coating preferably has a room temperature viscosity of from 0.05 to 4.0 Pa.s (50 to 4,000 cps) and is preferably applied at a coat weight of 0.1 to 2.0 g/m².

The coating may be cured using UV or electron beam radiation. Upon curing, the coating is immediately suitable for printing by an electrophotographic printing device, providing printers with the ability to apply and cure the coating in line with the printing operation.

The coating may be cured using UV or electron beam radiation. Upon curing, the coating is immediately suitable for printing by an electrophotographic printing device, providing printers with the ability to apply and cure the coating in line with the printing operation.

Accordingly, it is a feature of the invention to provide a 100% solids energy curable liquid primer coating for use on a variety substrates which provides good ink and toner adhesion upon curing. Advantageously, the primer coating compositions of the invention essentially consist of those components described herein and lack aqueous or organic solvents. Other features and advantages of the invention will be apparent from the following description.

### DETAILED DESCRIPTION OF THE PREFERRED EMBODIMENTS

Embodiments of the energy curable primer coating described herein provide many advantages over prior primer coatings in that they are 100% solids, containing no water or other solvents. Thus, when the coating is applied to a substrate, it may be immediately cured followed by printing without the need for separate heating and/or drying steps such that all of coating, curing and printing processes may be performed in an inline process, if desired.

Unless otherwise indicated, the disclosure of any ranges in the specification and claims are to be understood as including the range itself and also anything subsumed therein, as well as endpoints.

One suitable energy curable coating comprises from 35 to 65% by weight of a polyester acrylate, from 20 to 60% by weight of at least acrylates for use in the primer coating are commercially available from Cytec Industries under the designation Ebecryl®. A preferred polyester acrylate is Ebecryl® 888.

The acrylated amine is suitably present in the primer coatings of the invention in an amount of from 20 to 60% by weight, and in some embodiments may be present in an amount of from 25 to 55% or from 30 to 50% by weight. Suitable acrylated amines (oligoamines) are commercially available from Rahn USA Corp. under the designation Genomer®. A preferred acrylated amine is Genomer® 5142 which is included in the coating formulation in an amount of from 20 to 60% by weight. Other suitable acrylated amines include CN371 and CN386 (commercially available from Sartomer), or an amine modified polyether acrylate oligomer such as CN551 (Sartomer).

At least one additional acrylated amine may be included in the coating compositions of the invention in e.g. an amount of from 1 to 20% by weight; from 2 to 15% by weight; or from 3 to 10% by weight. One such additional acrylated amine which may be optionally included in the coating is Ebecryl® 7100 (Cytec), which may preferably be used in an amount of up to 10% (e.g. from 1 to 10%) by weight. Another additional acrylated amine is Genomer® 5275 (Rahn), which may be used in the amount of up to 20% (e.g. from 1 to 20%) by weight of the coating formulation. It will be understood that the suitable/exemplified acrylated amines above may also be used as the at least one additional acrylated amine and *vice versa.*

The coating compositions of the invention may include an acrylate monomers, e.g. from 0 to 10% by weight. When an acrylate monomer is present, it may, therefore, be included in an amount up to 10% by weight, such as from 1 to 10%, or from 2 to 8% by weight. Suitable acrylate monomers for use in the coating composition include lauryl acrylate, isodecyl acrylate, 1,6-hexanediol diacrylate, and trimethylolpropane ethoxy triacrylate.

A photoinitiator is included in the coating composition in an amount of about 1 to 15% by weight, such as 2 to 12%, or 3 to 10% by weight. Suitable photoinitiators for use in the primer coating include, but are not limited to, 1-hydroxycyclohexylphenylketone, commercially available under the designation Genocure® CPK (Rahn), dimethyl hydroxy acetophenone, commercially available under the designation Genocure® DMHA (Rahn), methyl benzoyl formate, commercially available under the designation Genocure® MBF (Rahn), benzophenone, commercially available under the designation Genocure® BP (Rahn), a liquid photoinitiator blend, commercially available under the designation Genocure® LTM (Rahn), and a blend of phosphine oxide, alpha-hydroxy ketone and a benzophenone derivative commercially available under the designation Esacure® KTO 46 (Lamberti USA).

The primer coating may further optionally include an aliphatic epoxy acrylate such as Genomer® 2235 (Rahn), or an aliphatic urethane acrylate such as Ebecryl® 8402 (Cytec). An aliphatic epoxy acrylate or an aliphatic urethane acrylate may be present in the primer coating in an amount of from 0 to 50% by weight of the coating formulation. In some embodiments, therefore, the primer coating includes up to 50% by weight of an aliphatic epoxy acrylate or an aliphatic urethane acrylate, such as from 1 to 50%. Suitably, when present, the aliphatic epoxy acrylate or an aliphatic urethane acrylate is included in an amount of from 5 to 44%; or from 10 to 35% by weight. The coating may also contain a saturated polyester resin in a urethane acrylate in an amount of from 0 to 30% by weight of the coating formulation; for example, from 1 to 30%, or from 5 to 25% by weight). A preferred saturated polyester resin in a urethane acrylate is Genomer® 6043/M22 (Rahn).

The primer coating is preferably prepared by adding the components to a mixing vessel and mixing with a stirrer at ambient temperatures until all of the components are dissolved.

The primer coating may be applied at room temperature to cellulosic substrates, polymer substrates, metallized substrates, or metallic foil substrates. Suitable cellulosic substrates include paper, clay-coated or uncoated paperboard such as clay-coated folding carton grade SBS, and uncoated liquid carton grade SBS. Suitable polymeric substrates include polypropylene, polyethylene, polyethylene terephthalate, and polylactic acid, polyvinyl chloride, polycarbonate, and polyamide. Suitable metallic foil substrates may include aluminum foil, and suitable metallized substrates include, but are not limited to, metallized paper and metallized polymer films.

The coating may be applied to one or both (major) sides of the substrate as desired. If desired, indicia may be pre-printed on the substrate prior to coating such that the coating overlies the indicia.

The primer coating composition is a 100% solids coating which is preferably applied to the substrate as a liquid. The coating composition preferably has a room temperature viscosity of from 0.05 to 4.0 Pa.s (50 to 4,000 cps) and may be suitable metallized substrates include, but are not limited to, metallized paper and metallized polymer films.

The coating may be applied to one or both (major) sides of the substrate as desired. If desired, indicia may be pre-printed on the substrate prior to coating such that the coating overlies the indicia.

The primer coating composition is a 100% solids coating which is preferably applied to the substrate as a liquid. The coating composition preferably has a room temperature viscosity of from 50 to 4,000 cps and may be applied by flexographic, gravure, offset gravure, screen, rod coating, or other suitable means. The coating is preferably applied at a coating weight of from 0.1 to 2.0 g/m². In some embodiments, the coating may be applied at a coating weight of from 0.25 to 1.75 g/m².

After coating, the coated substrate is then exposed to an energy source, such as a UV lamp or electron beam to cure the coating. The coated substrate is preferably exposed at a UV dosage of 100 to 1000 mJ/cm² (H-bulb), or exposed to electron beam at a dosage ranging from 1 to 9 Mrads with a voltage range of 80 to 200 KV. After the coating has been cured, the coated substrate may be printed using an electrophotographic printer. Suitable printers for use with the coating include, but are not limited to, HP Indigo Printer Models S2000, WS4500, WS6000, and 7000 series.

In order that the invention may be more readily understood, reference is made to the following examples which are intended to illustrate the invention, but not limit the scope thereof.

### Example 1

An energy curable primer coating composition was prepared in accordance with an embodiment of the invention using the following components: polyester acrylate (Ebecryl® 888), acrylated amine (Genomer® 5142), an acrylate monomer (1,6-Hexanediol diacrylate; optional), and a photoinitiator (Genocure® DMHA). The amounts of components in the formulations are set forth below in Table 1. All amounts are reported as weight percentages. No water or other solvents or carriers were present.

**Table 1**

| **Component** | **Sample 1** | **Sample 2** | **Sample 3** |
|---|---|---|---|
| polyester acrylate | 42.50 | 52.5 | 52.5 |
| acrylated amine | 50.0 | 40.0 | 35.0 |
| 1,6-Hexanediol diacrylate | 0 | 0 | 5.0 |
| Photoinitiator | 7.5 | 7.5 | 7.5 |

All formulations were prepared by adding the components to a mixing vessel, and mixing with a mechanical stirrer at ambient temperature until all components were dissolved.

The liquid formulas were then applied at room temperature onto 27.2 kg (60 lb.) label stock using a 400/5 Anilox applicator at a coat weight of approximately 0.2 to 2.0 dry gsm. The coated samples were then passed through a Fusion UV unit fitted with an H-bulb at a dosage of about 700 mJ/cm² to cure the liquid coating at a web speed of about 21.3 m/min (70 ft./min).

The cured coated substrates were subjected to ink transfer and ink adhesion tests (in accordance with ASTM F 2252-03) after printing with several different models of HP Indigo digital printers. Adhesion testing was carried out immediately after printing by applying either a strip of 5 cm of 3M 230 adhesive tape to the inked surface. A 1 kg weight was rolled over the samples ten times to ensure that the tape was firmly adhered to the substrate. The tape was then removed by peeling back at an angle of approximately 120 to 150°. The percentage of ink remaining on the tested sample was then evaluated against a reference table.

The results are shown below in Table 2. The percent of ink/toner adhesion is recorded as 100% when no ink/toner is removed by the tape and 0% when all the ink/toner is removed.

**Table 2**

| Ink adhesion | | | |
|---|---|---|---|
| **Indigo Printer Model** | **Sample 1** | **Sample 2** | **Sample 3** |
| S2000 | 70% | 75% | Not tested |
| WS4500 | 70% | 70% | Not tested |
| WS6000 | Not tested | 75% | 80% |

### Example 2

An energy curable primer coating composition was prepared in accordance with an embodiment of the invention using the following components: polyester acrylate (Ebecryl® 888), acrylated amine (Genomer® 5142), an additional acrylated amine (Ebecryl® 7100 and Genomer® 5275), an acrylate monomer (1,6-Hexanediol diacrylate; optional), and a photoinitiator (Genocure® DMHA). The amounts of components in the formulations are set forth below in Table 3. All amounts are reported as weight percentages. No water or other solvents or carriers were present.

**Table 3**

| Samples | | | | | | | | | | | |
|---|---|---|---|---|---|---|---|---|---|---|---|
| **Component** | **1** | **2** | **3** | **4** | **5** | **6** | **7** | **8** | **9** | **10** | **Control (uncoated)** |
| polyester acrylate | 42.5 | 52.5 | 57.5 | 52.5 | 52.5 | 50 | 50 | 55 | 40 | 47.5 | 0 |
| acrylated amine (Genomer® 5142) | 50 | 40 | 35 | 35 | 35 | 40 | 35 | 30 | 50 | 35 | 0 |
| acrylated amine (Ebecryl® 7100) | 0 | 0 | 0 | 0 | 5 | 0 | 0 | 0 | 0 | 0 | 0 |
| acrylated amine (Genomer® 5275) | 0 | 0 | 0 | 0 | 0 | 0 | 0 | 0 | 0 | 10 | 0 |
| 1,6-Hexanediol diacrylate | 0 | 0 | 0 | 5 | 0 | 0 | 5 | 5 | 0 | 0 | 0 |
| photoinitiator | 7.5 | 7.5 | 7.5 | 7.5 | 7.5 | 10 | 10 | 10 | 10 | 7.5 | 0 |
| ink adhesion | Not Tested | Not Tested | Not Tested | 75% | Not Tested | 50% | Not Tested | Not Tested | Not Tested | 75% | 20% |

All formulations were prepared as described in Example 1 and were coated onto 27.2 kg (60 lb.) label stock. Samples 4, 6, and 10 from Table 3 were further applied at room temperature onto a 27.2 kg (60 lb.) label stock using an offset gravure coater with a 440 Anilox applicator roll. The coated label stock was then passed through a 400 watts/inch H-bulb at a dosage of about 150 to 200 mJ/cm² to cure the coatings. The samples were cured at a web speed of about 30.5 m/min (100 feet per minute).

The UV coated samples and the un-coated 27.2 kg (60 lb.) label stock were then printed on a HP WS 6000 Indigo Printer, using the un-coated 27.2 kg (60 lb.) label stock as the control. An ink adhesion test was carried out by applying a strip of 10 cm of 3M 230 adhesive tape to the inked surface. A 2 kg weight was rolled over the samples two times to ensure the tape was firmly adhered to the substrate. The tape was then removed by peeling back at an angle of approximately 120 to 150°. The percentage of ink remaining on the tested sample was then evaluated against a reference table. The percent of ink/toner adhesion is recorded as 100% when no ink/toner is removed by the tape and 0% when all the ink/toner is removed. As can be seen in Table 3, in comparison with the uncoated control sample, samples 4, 6, and 10 made in accordance with embodiments of the invention showed significant improvement in ink adhesion.

### Example 3

Comparative energy curable primer coating compositions were prepared as described in Example 1 using the following components:

The cured coated substrates and uncoated 27.2 kg (60 lb.) label stock were printed with an HP Indigo WS 6000 printer and immediately after printing, ink adhesion testing was carried out according to the procedure described in Example 1.

**Table 4**

| **Component** | **Sample 1** | **Sample 2** | **27.2 kg (60 lb.) label stock (uncoated)** |
|---|---|---|---|
| Polyester acrylate (Ebecryl® 888) | 92.5 | 0 | 0 |
| acrylated amine (Genomer® 5142) | 0 | 92.5 | 0 |
| Photoinitiator (Genocure® DMHA) | 7.5 | 7.5 | 0 |
| **Ink adhesion** | 10% | 20% | 20% |

Both the uncoated 27.2 kg (60 lb.) label stock and Sample 2 printed well with good ink transfer, but Sample 1 of this Example did not print well and exhibited poor ink transfer. Ink adhesion tests were performed on the areas that printed on each sample, and the results are shown in Table 4. As can be seen, the comparative compositions exhibit poor ink adhesion in comparison with coatings prepared in accordance with embodiments of the invention.

Having described the invention in detail and by reference to preferred embodiments thereof, it will be apparent that modifications and variations are possible without departing from the scope of the invention, which is defined in accordance with the appended claims.

## Claims

1. Use of a solvent-free energy curable liquid primer coating for enhancing ink adhesion to a substrate, said coating comprising from 35 to 65% by weight of a polyester acrylate, from 20 to 60% by weight of at least one acrylated amine, and from 1 to 15% by weight of a photoinitiator.

2. The use of the primer coating according to claim 1, wherein said coating further includes an acrylate monomer which is different than said polyester acrylate.

3. The use of the primer coating according to claim 2, wherein said acrylate monomer is selected from lauryl acrylate, isodecyl acrylate, 1,6-hexanediol diacrylate, and trimethylolpropane ethoxy triacrylate.

4. The use of the primer coating according to any preceding claim, wherein said coating further includes at least one additional acrylated amine.

5. The use of the primer coating according to any preceding claim, wherein said coating has a viscosity of from 0.05 to 4.0 Pa.s (50 to 4,000 cps) at room temperature.

6. The use of the primer coating according to any preceding claim, wherein said coating further includes an aliphatic epoxy acrylate or an aliphatic urethane acrylate.

7. A 100% solids energy curable liquid primer coating comprising:
a) from 35 to 65% by weight of a polyester acrylate;
b) from 20 to 60% by weight of at least one acrylated amine;
c) from 0 to 10% by weight of an acrylate monomer; and
d) from 1 to 15% by weight of a photoinitiator.

8. The primer coating of claim 7, including from 1 to 20% by weight of at least one additional acrylated amine.

9. A method of applying a 100% solids energy curable liquid primer coating for enhancing ink adhesion to a substrate comprising:
providing a substrate having first and second major surfaces;
applying a 100% solids energy curable liquid primer coating to at least one of said first and second major surfaces of said substrate; said coating comprising from 35 to 65% by weight of a polyester acrylate, from 20 to 60% by weight of at least one acrylated amine, and from 1 to 15% by weight of a photoinitiator; and
exposing said coating composition to radiation sufficient to cure said coating composition and form a coated substrate.

10. The method of claim 9, further including printing said coated substrate using an electrophotographic printing device.

11. The method of claim 9 or claim 10, wherein said substrate is comprised of paper, clay-coated or uncoated paperboard, foil, a polymeric material, or a metallized substrate.

12. A coated substrate, said substrate having first and second major surfaces, with at least one of said major surfaces having coated thereon a cured 100% solids primer coating comprising from 35 to 65% by weight of a polyester acrylate, from 20 to 60% by weight of at least one acrylated amine, and from 1 to 15% by weight of a photoinitiator.

13. The coated substrate of claim 12, wherein said coated substrate includes printed indicia on said substrate underlying said primer coating.

14. The coated substrate of claim 12 or claim 13, wherein said substrate comprises paper, clay-coated or uncoated paperboard, a polymeric material, metal foil, or metallized substrates.

## Patentansprüche

1. Gebrauch einer lösungsmittelfreien, durch Energie aushärtbaren flüssigen Grundierung zum Verbessern der Druckfarbenhaftung auf einem Substrat, wobei die Beschichtung zu 35 bis 65 Gewichts-% ein Polyesteracrylat, zu 20 bis 60 Gewichts-% mindestens ein acryliertes Amin und zu 1 bis 15 Gewichts-% einen Photoinitiator umfasst.

2. Gebrauch der Grundierung nach Anspruch 1, wobei die Beschichtung weiter ein Acrylatmonomer umfasst, das von dem Polyesteracrylat verschieden ist.

3. Gebrauch der Grundierung nach Anspruch 2, wobei das Acrylatmonomer aus Laurylacrylat, Isodecylacrylat, 1,6-Hexandiol-diacrylat und Trimethylolpropan-ethoxytriacrylat ausgewählt ist.

4. Gebrauch der Grundierung nach einem der vorangehenden Ansprüche, wobei die Beschichtung weiter mindestens ein zusätzliches acryliertes Amin umfasst.

5. Gebrauch der Grundierung nach einem der vorangehenden Ansprüche, wobei die Beschichtung bei Raumtemperatur eine Viskosität von 0,05 bis 4,0 Pa·s (50 bis 4.000 cP) aufweist.

6. Gebrauch der Grundierung nach einem der vorangehenden Ansprüche, wobei die Beschichtung weiter ein aliphatisches Epoxidacrylat oder ein aliphatisches Urethanacrylat umfasst.

7. Durch Energie in 100 % Feststoffe aushärtbare, flüssige Grundierung, die Folgendes umfasst:
a) zu 35 bis 65 Gewichts-% ein Polyesteracrylat;
b) zu 20 bis 60 Gewichts-% mindestens ein acryliertes Amin;
c) zu 0 bis 10 Gewichts-% ein Acrylatmonomer; und
d) zu 1 bis 15 Gewichts-% einen Photoinitiator.

8. Grundierung nach Anspruch 7, umfassend zu 1 bis 20 Gewichts-% mindestens ein zusätzliches acryliertes Amin.

9. Verfahren zum Auftragen einer durch Energie in 100 % Feststoffe aushärtbaren flüssigen Grundierung zum Verbessern der Druckfarbenhaftung auf einem Substrat, das Folgendes umfasst:
Bereitstellen eines Substrats mit einer ersten und einer zweiten Hauptfläche;
Auftragen einer durch Energie in 100 % Feststoffe aushärtbaren flüssigen Grundierung auf die erste und/oder die zweite Hauptfläche des Substrats, wobei die Beschichtung zu 35 bis 65 Gewichts-% ein Polyesteracrylat, zu 20 bis 60 Gewichts-% mindestens ein acryliertes Amin und zu 1 bis 15 Gewichts-% einen Photoinitiator umfasst; und
Belichten der Beschichtungszusammensetzung mit Strahlung, die ausreicht, um die Beschichtungszusammensetzung auszuhärten und ein beschichtetes Substrat zu bilden.

10. Verfahren nach Anspruch 9, weiter umfassend das Bedrucken des beschichteten Substrats unter Verwendung einer elektrophotographischen Druckvorrichtung.

11. Verfahren nach Anspruch 9 oder Anspruch 10, wobei das Substrat aus Papier, tonbeschichtetem oder unbeschichtetem Karton, Folie, einem Polymermaterial oder einem metallisierten Substrat besteht.

12. Beschichtetes Substrat, wobei das Substrat eine erste und eine zweite Hauptfläche aufweist, wobei mindestens eine der Hauptflächen mit einer in 100 % Feststoffe ausgehärteten Grundierung beschichtet ist, die zu 35 bis 65 Gewichts-% ein Polyesteracrylat, zu 20 bis 60 Gewichts-% mindestens ein acryliertes Amin und zu 1 bis 15 Gewichts-% einen Photoinitiator umfasst.

13. Beschichtetes Substrat nach Anspruch 12, wobei das beschichtete Substrat gedruckte Zeichen auf dem Substrat umfasst, die unter der Grundierung liegen.

14. Beschichtetes Substrat nach Anspruch 12 oder Anspruch 13, wobei das Substrat Papier, tonbeschichteten oder unbeschichteten Karton, ein Polymermaterial, Metallfolie oder metallisierte Substrate umfasst.

## Revendications

1. Utilisation d'un revêtement d'apprêt liquide durcissable par énergie dépourvu de solvant destinée à renforcer l'adhérence de l'encre à un substrat, ledit revêtement comprenant de 35 à 65 % en poids d'un polyester acrylate, de 20 à 60 % en poids d'au moins une amine acrylée et de 1 à 15 % en poids d'un photo-initiateur.

2. Utilisation du revêtement d'apprêt selon la revendication 1, dans laquelle ledit revêtement inclut en outre un monomère d'acrylate qui est différent dudit polyester acrylate.

3. Utilisation du revêtement d'apprêt selon la revendication 2, dans laquelle ledit monomère d'acrylate est choisi parmi l'acrylate de lauryle, l'acrylate d'isodécyle, le diacrylate de 1,6-hexanediol et l'éthoxy triacrylate de triméthylolpropane.

4. Utilisation du revêtement d'apprêt selon l'une quelconque des revendications précédentes, dans laquelle ledit revêtement inclut en outre au moins une amine acrylée additionnelle.

5. Utilisation du revêtement d'apprêt selon l'une quelconque des revendications précédentes, dans laquelle ledit revêtement a une viscosité de 0,05 à 4,0 Pa.s (50 à 4 000 cps) à température ambiante.

6. Utilisation du revêtement d'apprêt selon l'une quelconque des revendications précédentes, dans laquelle ledit revêtement inclut en outre un époxy acrylate aliphatique ou un uréthane acrylate aliphatique.

7. Revêtement d'apprêt liquide durcissable par énergie à 100 % de solides comprenant :
a) de 35 à 65 % en poids d'un polyester acrylate ;
b) de 20 à 60 % en poids d'au moins une amine acrylée ;
c) de 0 à 10 % en poids d'un monomère d'acrylate ; et
d) de 1 à 15 % en poids d'un photo-initiateur.

8. Revêtement d'apprêt selon la revendication 7, incluant de 1 à 20 % en poids d'au moins une amine acrylée additionnelle.

9. Procédé d'application d'un revêtement d'apprêt liquide durcissable par énergie à 100 % de solides destiné à renforcer l'adhérence de l'encre à un substrat comprenant :
la fourniture d'un substrat ayant des première et seconde surfaces majeures ;
l'application d'un revêtement d'apprêt liquide durcissable par énergie à 100 % de solides sur au moins l'une desdites première et seconde surfaces majeures dudit substrat ; ledit revêtement comprenant de 35 à 65 % en poids d'un polyester acrylate, de 20 à 60 % en poids d'au moins une amine acrylée et de 1 à 15 % en poids d'un photo-initiateur ; et
l'exposition de ladite composition de revêtement à un rayonnement suffisant pour durcir ladite composition de revêtement et former un substrat revêtu.

10. Procédé selon la revendication 9, incluant en outre l'impression dudit substrat revêtu à l'aide d'un dispositif d'impression électrophotographique.

11. Procédé selon la revendication 9 ou la revendication 10, dans lequel ledit substrat est composé de papier, de carton couché au kaolin ou non couché, d'une feuille, d'un matériau polymérique ou d'un substrat métallisé.

12. Substrat revêtu, ledit substrat ayant des première et seconde surfaces majeures, au moins l'une desdites surfaces majeures étant revêtue d'un revêtement d'apprêt durci à 100 % de solides comprenant de 35 à 65 % en poids d'un polyester acrylate, de 20 à 60 % en poids d'au moins une amine acrylée et de 1 à 15 % en poids d'un photo-initiateur.

13. Substrat revêtu selon la revendication 12, dans lequel ledit substrat revêtu inclut des indices imprimés sur ledit substrat sous-jacents audit revêtement d'apprêt.

14. Substrat revêtu selon la revendication 12 ou la revendication 13, dans lequel ledit substrat comprend du papier, du carton couché au kaolin ou non couché, un matériau polymérique, une feuille de métal ou des substrats métallisés.
